Europäisches Patentamt

European Patent Office

Office européen des brevets

(19)

(11) EP 0 882 675 A1

(12) EUROPÄISCHE PATENTANMELDUNG

(43) Veröffentlichungstag:
09.12.1998 Patentblatt 1998/50

(51) Int. Cl.$^6$: C02F 1/54, C02F 1/52

(21) Anmeldenummer: 98109588.8

(22) Anmeldetag: 27.05.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 03.06.1997 DE 19723212

(71) Anmelder:
BK Giulini Chemie GmbH & Co. OHG
67065 Ludwigshafen (DE)

(72) Erfinder:
• Dörrer, Hubert, Dr.
  67141 Neuhofen (DE)
• Imhof, Reinhold
  67065 Ludwigshafen (DE)
• Sedelies, Reinhold, Dr.
  67105 Schifferstadt (DE)

(54) Verfahren zur Verbesserung der Denitrifizierung bei gleichzeitiger Dephosphatierung bei der Abwasserbehandlung

(57) Die vorliegende Erfindung bezieht sich auf Zusatzmittel, die in Abwassereinigungsanlagen eingesetzt werden, insbesondere in der biologischen Klärstufe der entsprechenden Anlagen, zur Verbesserung der Denitrifizierung bei gleichzeitiger Dephosphatierung des Abwassers. Das Zusatzmittel, in Form einer Lösung, Suspension oder Dispersion, wird hergestellt duch Mischung, Auflösung oder Dispergierung von drei und zweiwertigen Metallsalzen und aus einer leicht abbaubaren Kohlenstoffquelle.

EP 0 882 675 A1

**Beschreibung**

Die vorliegende Erfindung bezieht sich auf Zusatzmittel, die in Abwasserreinigungsanlagen eingesetzt werden, insbesondere in der biologischen Klärstufe der entsprechenden Anlagen, zur Verbesserung der Denitrifizierung bei gleichzeitiger Dephosphatierung des Abwassers.

Es ist bekannt, dass eine Reihe von Bakterien, je nach Umgebungsbedingungen, zur Deckung ihres Sauerstoffbedarfs im Wasser gelösten Sauerstoff verwenden und beim Unterschreiten eines bestimmten, gelösten Sauerstoffgehalts im Wasser Nitrat spalten, um den enthaltenen Sauerstoff für ihren Stoffwechsel zu verwenden. Üblicherweise wird dieses Phänomen zur Entfernung des Stickstoffs aus Abwässern durch folgendes Vorgehen genutzt: Nachdem das Abwasser durch mechanische Prozesse vorgereinigt wurde, wird es einer biologischen Stufe zugeführt. Die Arbeitsweise wird hier kurz anhand eines Chargenverfahrens beschrieben, in der Regel jedoch kontinuierlich betrieben.

Das Abwasser wird zusammen mit Schlamm aus vorangegangenen Zyklen, eventuell unter Zusatz von Flockungs- und anderen Zusatzmitteln belüftet. Unter diesen aeroben Bedingungen werden durch Mikrolebewesen Kohlenwasserstoffe zu Kohlendioxid und Wasser, enthaltene Phosphorverbindungen zu Phosphat und Stickstoffverbindungen zu Nitrat oxidiert. Nachdem dieser Vorgang weitgehend abgeschlossen ist, wird die Belüftung abgestellt und es entstehen anoxische Bedingungen. Zahlreiche Mikrolebewesen decken nun ihren zum Stoffwechsel nötigen Sauerstoff aus der Spaltung von Nitrat zu elementarem Stickstoff und Sauerstoff. Leicht verwertbare Kohlenstoffquellen sind jedoch in der Regel während der aeroben Phase bereits abgebaut worden, so dass zu diesem Zeitpunkt nur noch wenige leicht verwertbare Kohlenstoffquellen zur Verfügung stehen.
Dieser Mangel wird oft durch Zugabe einer leicht abbaubaren Kohlenstoffquelle ausgeglichen. Bekannt ist in diesem Zusammenhang die Zugabe von kurzkettigen Alkoholen oder von kurzkettigen organischen Säuren.

Nachdem das Nitrat ausreichend abgebaut wurde, wird der Schlamm, u.U. mit Hilfsmitteln, abgetrennt (Sedimentation, Flotation, Filtration usw.) und die Klarphase kann in den Vorfluter abgegeben werden. Ein Teil des Schlamms wird in die Schlammbehandlung abgegeben, der Rest steht für den nächsten Zyklus mit neuem Abwasser zur Verfügung. Diesen Schlamm nennt der Fachmann auch Impfschlamm.

Überraschenderweise hat sich nun gezeigt, dass ein synergistischer Effekt auftritt, wenn bei der Behandlung von kommunalem und/oder industriellem Abwasser ein Zusatzmittel verwendet wird, das einerseits Fäll-oder Flockungsmittel auf der Basis drei oder zweiwertiger Metallsalze und andererseits eine leicht abbaubare Kohlenstoffquelle enthält. Dieses Zusatzmittel kann in Form einer wässrigen Lösung oder Suspension, der folgenden Stöchiometrie eingesetzt werden

$$Me_a^{III}Me_b^{II}(OH)_cX_dR_e$$

wobei:

| | |
|---|---|
| $Me^{III}$ | Aluminium,(Al) oder Eisen (Fe) |
| $Me^{II}$ | Eisen (Fe), Kalzium (Ca) oder Magnesium (Mg) |
| X | Chlorid (Cl), Sulfat ($SO_4$) oder Nitrat ($NO_3$) |
| R | aus der Gruppe Formiat, Acetat, Oxalat, Propionat, Tartrat, Lactat, Maleat oder Citrat oder Mischungen dieser Anionen ausgewählt sein kann. |

Die Stöchiometrie-Faktoren a, b, c, d und e sich ergeben wie folgt:

a von 0 bis 1, wobei für a und b folgender Zusammenhang gilt: $3 \cdot a + 2 \cdot b = 3$
c von 0 bis 2,5 (bevorzugt von 0 bis 1,5)
d von 0 bis 2,95/z, wobei z die Zahl der negativen Ladungen des Anions beschreibt,
e von 0,05 bis 3/y, wobei y die Zahl der Säurefünktionen der zum Anion R korrespondierenden Säure $H_yR$ beschreibt

und die Faktoren c, d und e außerdem der folgenden Gleichung genügen:

$$c+d/z+e/y=3$$

wobei die Lösungen oder Suspensionen durch Mischung oder Auflösung oder Disperierung hergestellt werden.
Es ist weiterhin vorteilhaft das erfindungsgemäße Zusatzmittel mit kurzkettigen Alkoholen, z.B.Methanol, Ethanol, Propanol oder Isopropanol oder deren Mischungen zu verwenden. Das erfindungsgemäße Zusatzmittel kann auch einen Säureüberschuss enthalten.

Es kann ferner in den Rückschlamm und/oder in den Impfschlamm dosiert werden, insbesondere kann es wahlweise zum Ablauf der Biologie oder zum Zulauf der Denitrifizierung (anoxische Zone) dosiert werden.

Es ist auch möglich das erfindungsgemäße Zusatzmittel zur Verfahrenseinheit der Abtrennung des Belebtschlammes zu dosieren. Besonders vorteilhaft ist die Dosierung in eine Flotation, da durch die gleichzeitige Flockung und Verbesserung der Denitrifizierung der gebildte Stickstoff in der Flocke zu einer ausgezeichneten Flotation führt.

Das Zusatzmittel kann sowohl in einem Chargenverfahren, als auch einem kontinuierlich arbeitenden Verfahren eingesetzt werden.

Bei der Verwendung der erfindungsgemäßen Zusatzmittel ist der Anstieg des CSB (chemischer Sauerstoffbedarf) in der Klarphase signifikant niedriger im Vergleich zum Zusatz der Kohlenstoffquelle ohne Fäll- oder Flockungsmittel. Es kann gleichzeitig mit der Verbesserung der Denitrifizierung der Phosphatgehalt nachhaltig gesenkt werden und es ist nur eine Dosier- und Lagereinrichtung für Zusatzmittel notwendig.

Im folgenden sind die technischen Vorteile der erfindungsgemäßen Zusatzmittel und ihrer verfahrenstechnischen Anwendung anhand mehrerer Beispiele näher erläutert. Allen großtechnischen Beispielen liegt eine kommunale Kläranlage zugrunde, deren Aufbau im folgenden grob dargestellt ist:

Anschluss:    ca. 22.000 Einwohnergleichwerte
              ca. 2.000 bis 2.500 $m^3$/d bei Trockenwetter

Nach einer mechanischen Grobreinigung steht ein 300 $m^3$ großes Vorklärbecken zur Verfügung, das gleichzeitig einer Versäuerung Vorschub leistet. Im Anschluss daran wird unter Zufügung des Rücklaufschlamms eine anoxische Zone mit ca. 350 $m^3$ Volumen durchlaufen, die der Denitrifizierung dient. In der folgenden Biologie wird durch Sauerstoffeintrag weiter Ammoniumstickstoff biologisch zum Nitrat oxidiert. Der Belebtschlamm wird im Nachklärbecken abgetrennt, der Rücklaufschlamm wieder der anoxischen Stufe zugeführt und der Überschussschlamm der Schlammbehandlung zugeführt.

### Beispiel 1:

In der oben beschriebenen Kläranlage wurde eine Phase mit guter Nitrifizierung abgewartet.

Der $NO_3$-N-Gehalt des Ablaufes aus dem Nachklärbecken betrug in der 24-Stundenmischprobe am Tag vor dem Versuchsbeginn 76 mg $NO_3$-N/l.

Das zuerst eingesetzte Zusatzmittel entsprach der folgenden Stöchiometrie:

$(Al(OH)(HCO_2)_2)_{aq.}$ (basisches Aluminiumformiat).

Die Dosierung des Zusatzmittels erfolgte in die Ablaufrinne der Biologie, über die das Abwasser zum Nachklärbecken geleitet wird. Die Dosiermenge betrug 6 l/h, die Abwassermenge betrug 2100 $m^3$/d.

Nach dem Abwarten der Verweilzeit des Abwassers im Nachklärbecken wurde der $NO_3$-N-Gehalt des Ablaufs aus dem Nachklärbecken analysiert, er betrug 7 mg $NO_3$-N/l. Über die gesamte 2-wöchige Versuchszeit konnte ein $NO_3$-N-Gehalt unter 15 mg/l, in der Regel unter 10 mg/l eingehalten werden. Gleichzeitig konnte der $PO_4$-P-Gehalt problemlos unter 2 mg/l gehalten werden. Während der ganzen Versuchszeit war kein Anstieg im CSB des Ablaufes der Nachklärung festzustellen. Der Durchschnittswert des CSB-Gehaltes lag um 8 mg $O_2$/l niedriger als vor Beginn der Dosierung des Zusatzmittels.

### Beispiel 2:

In einer 2. Versuchsphase wurde als Zusatzmittel die wässrige Lösung einer Mischung der folgenden Stöchiometrie eingesetzt:

$(Al(OH)_{0,39}Cl_{1,85}(CH_3\text{-}CO2)_{0,76}$ (basisches Aluminiumchloridacetat).

Die Dosierstelle wurde an der gleichen Stelle belassen, wie unter Beispiel 1 beschrieben. Die Dosiermenge wurde zwischen 3 und 12 l/h gewählt, abhängig von den Gehalten an $NO_3$-N und $PO_4$-P. Auch hier konnte während der gesamten einmonatigen Versuchsdauer der $NO_3$-N-Gehalt sicher unter 10 mg/l gehalten werden, der $PO_4$-P-Gehalt lag mit 4 Ausnahmen unter 2 mg/l. Bei dieser Versuchsperiode konnte zwar keine Reduzierung des CSB im Ablauf der Nachklärung festgestellt werden, eine, bei der Dosierung von Essigsäure festgestellte, Erhöhung des CSB blieb aber aus.

### Beispiel 3:

In einem Laborversuch wurde mit gleichem Abwasser (der Ablauf aus der Biologie einer kommunalen Kläranlage) ein Vergleichsversuch zwischen dem in Beispiel 2 genannten erfindungsgemäßen Zusatzprodukt, das in den folgenden Tabellen Produkt 1 genannt wird,

$(Al(OH)_{0,39}Cl_{1,85}(CH_3\text{-}CO2)_{0,76}$ (basisches Aluminiumchloridacetat) und Essigsäure durchgeführt.
Geprüft wurde nach einer Verweilzeit von 90 Minuten, ob ein $NO_3\text{-}N$ Gehalt von unter 15 mg/l erreicht wurde und welcher CSB in der Klarphase auftritt.

| Dosierung von 35 mg/l Essigsäure | | | Dosierung von Produkt 1, entsprechend 36 mg/l Essigsäure | | |
|---|---|---|---|---|---|
| Zeit min | $NO_3$-N mg/l | CSB mg/l | $NO_3$-N mg/l | CSB mg/l | |
| vorher | 30,1 | 69 | 30,1 | 69 | |
| 90 | < 15 | 72 | < 15 | 65 | |

| Dosierung von 60 mg/l Essigsäure | | | Dosierung von Produkt 1, entsprechend 60 mg/l Essigsäure | | |
|---|---|---|---|---|---|
| Zeit min | $NO_3$-N mg/l | CSB mg/l | $NO_3$-N mg/l | CSB mg/l | |
| vorher | 30,1 | 69 | 30,1 | 69 | |
| 90 | < 5 | 180 | < 5 | 89 | |

Dabei zeigt sich insbesondere, dass der CSB in der Klarphase bei Überdosierung mit dem erfindungsgemäßen Zusatzmittel weitaus niedriger ist, als bei der Verwendung von Essigsäure.

**Patentansprüche**

1. Verfahren zur Behandlung von kommunalem und/oder industriellem Abwasser zur Verbesserung der Denitrifizierung mit gleichzeitiger Dephosphatierung, dadurch gekennzeichnet, daß ein Zusatzmittel, in Form einer wässrigen Lösung oder Suspension, der folgenden Stöchiometrie eingesetzt wird:

$$Me_a^{III}Me_b^{II}(OH)_cX_dR_e$$

wobei:

$Me^{III}$: Aluminium (Al) oder Eisen (Fe)
$Me^{II}$: Eisen (Fe), Kalzium (Ca) oder Magnesium (Mg)
X: Chlorid (Cl), Sulfat ($SO_4$) oder Nitrat ($NO_3$)
R: aus der Gruppe Formiat, Acetat, Oxalat, Propionat, Tartrat, Lactat, Maleat oder Citrat oder Mischungen dieser Anionen sein kann.

Die Stöchiometrie-Faktoren a, b, c, d und e ergeben sich wie folgt:

a: von 0 bis 1, wobei für a und b folgender Zusammenhang gilt: $3 \cdot a + 2 \cdot b = 3$
c: von 0 bis 2,5, bevorzugt jedoch von 0 bis 1,5
d: von 0 bis 2,95/z, wobei z die Zahl der negativen Ladungen des Anions beschreibe,
e: von 0,05 bis 3/y, wobei y die Zahl der Säurefunktionen der zum Anion R korrespondierenden Säure $H_yR$ beschreibt

und die Söchiometriefaktoren c, d und e der folgenden Gleichung genügen:

$$c + d/z + e/y = 3.$$

2. Verfahren nach Anspruch 1, dadurch gekennzeichnet, daß das Zusatzmittel mit kurzkettigen Alkoholen, z.B. Methanol, Ethanol, Propanol oder Isopropanol oder deren Mischungen eingesetzt wird.

3. Verfahren nach den Ansprüchen 1 und 2, dadurch gekennzeichnet, daß das Zusatzmittel einen Säureüberschuss enthält.

4. Verfahren nach Ansprüchen 1 bis 3, dadurch gekennzeichnet, daß das Zusatzmittel in den Rückschlamm oder in den Impfschlamm dosiert wird.

5. Verfahren nach Ansprüchen 1 bis 3, dadurch gekennzeichnet, daß das Mittel zum Ablauf der Biologie dosiert wird.

6. Verfahren nach Ansprüchen 1 bis 3, dadurch gekennzeichnet, daß das Mittel zum Zulauf der Denitrifizierung (anoxische Zone) dosiert wird.

7. Verfahren nach Ansprüchen 1 bis 3, dadurch gekennzeichnet, daß das Mittel zur Verfahrenseinheit der Abtrennung des Belebtschlammes oder zum Zulauf der Flotation dosiert wird.

8. Verfahren nach Ansprüchen 1 bis 7, dadurch gekennzeichnet, daß das Mittel bei einem Chargenverfahren und/oder in einem kontinuierlich arbeitenden Verfahren eingesetzt wird.

**Europäisches Patentamt**

# EUROPÄISCHER RECHERCHENBERICHT

Nummer der Anmeldung

EP 98 10 9588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 722 906 A (ATOCHEM ELF SA)<br>24. Juli 1996<br>* Seite 3, Zeile 36-44; Ansprüche 1,2,4 *<br>--- | 1,5,8 | C02F1/54<br>C02F1/52 |
| A | US 3 544 476 A (AIBA YOSHIKAZU ET AL)<br>1. Dezember 1970<br>* Spalte 2, Zeile 12-53 *<br>--- | 1 | |
| A | EP 0 646 549 A (CAFFARO SPA IND CHIM)<br>5. April 1995<br>* Seite 3, Zeile 34-35; Ansprüche 1,17,18,21 *<br>--- | 1-3,6,8 | |
| P,A | EP 0 823 401 A (TOMITA PHARMA)<br>11. Februar 1998<br>* Seite 4, Zeile 24-54 - Seite 6, Zeile 22-23; Anspruch 1 *<br>----- | 1 | |

**RECHERCHIERTE SACHGEBIETE (Int.Cl.6)**

C02F

Der vorliegende Recherchenbericht wurde für alle Patentansprüche erstellt

| Recherchenort | Abschlußdatum der Recherche | Prüfer |
|---|---|---|
| DEN HAAG | 24. September 1998 | Gruber, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)